(19) Europäisches Patentamt
European Patent Office
Office européen des brevets

(11) EP 2 787 770 A1

(12) EUROPEAN PATENT APPLICATION

(43) Date of publication:
08.10.2014 Bulletin 2014/41

(51) Int Cl.:
*H04W 48/06* (2009.01)

(21) Application number: 13305446.0

(22) Date of filing: 05.04.2013

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(71) Applicant: ALCATEL LUCENT
92100 Boulogne-Billancourt (FR)

(72) Inventors:
• Lim, Seau Sian
Swindon, Wiltshire SN5 7DJ (GB)
• Puddle, Nicola
Swindon, Wiltshire SN5 7DJ (GB)
• Palat, Sudeep
Swindon, Wiltshire SN5 7DJ (GB)
• Worrall, Chandrika
Swindon, Wiltshire SN5 7DJ (GB)

(74) Representative: Coghlan, Judith Elizabeth Kensy
et al
Script IP Limited
Turnpike House
18 Bridge Street
Frome BA11 1BB (GB)

(54) **Network Control**

(57)     A method of controlling user equipment operation in a radio coverage cell of a wireless telecommunication network supported by a base station, a computer program product and base station operable to perform the method. The user equipment is configurable to communicate using a communication link established with the base station or with a wireless access point of a wireless local area network based upon a relative priority associated with each of the base station and the wireless access point. The method comprises: assessing at least one operational parameter of the cell of radio coverage; assigning a priority to communication using a communication link established with the base station based on the assessment of the at least one operational parameter; and communicating an indication of the assigned priority to the user equipment.

Aspects and embodiments provide a method of sending cell specific network selection to allow a user to choose between Wi-Fi and 3GPP RAN based upon the meeting of one or more criteria. The criteria may inform network selection information or take the form of selection policies sent to users. Those policies may take into account, amongst other things, both Wi-Fi and 3GPP cell load but without actually sending 3GPP load to a user.

FIG. 1

**Description**

FIELD OF THE INVENTION

A method of controlling user equipment operation in a radio coverage cell of a wireless telecommunication network supported by a base station, a computer program product and base station operable to perform that method.

BACKGROUND

Wireless telecommunication systems are known. In such systems, mobile communication devices (for example, mobile telephones) are operable to communicate with base stations provided by network providers.

In known wireless telecommunication systems, radio coverage is provided to network connectable devices, such as mobile telephones, or wireless devices such as iPads or other similar tablets, within areas known as cells. A base station is located in each cell to provide radio coverage. Typically, network connectable devices in each cell are operable to receive information and data from a base station and to transmit information and data to a base station.

User equipment roam through a wireless communications system. Base stations are typically provided which support areas of radio coverage. A number of such base stations are provided and are distributed geographically in order to provide a wide area of coverage to user equipment.

When user equipment is within an area served by a base station, communications may be established between the user equipment and the base station over associated radio links. Each base station typically supports a number of sectors within the geographical area of service. Typically, a different antenna within a base station supports each associated sector. Each base station has multiple antennas.

Cellular (3GPP) wireless networks often co-exist in geographical regions with 802.11 or similar Wi-Fi or similar Wireless Local Area Networks (WLAN). Smartphones, tablets and other similar network connectible devices are often configured to establish links with a core cellular network and one or more WLAN.

The coexistence of networks can result in unexpected consequences. It is desired to address one or more of those consequences.

**SUMMARY**

Accordingly, a first aspect provides a method of controlling user equipment operation in a radio coverage cell of a wireless telecommunication network supported by a base station, said user equipment being configured to communicate using a communication link established with said base station or with a wireless access point of a wireless local area network based upon a relative priority associated with each of said base station and said wireless access point, said method comprising:

assessing at least one operational parameter of said cell of radio coverage;
assigning a priority to communication using a communication link established with said base station based on said assessment of said at least one operational parameter; and communicating an indication of said assigned priority to said user equipment.

The first aspect recognises that a network operator may wish to specifically provision for appropriate mobility and/ or traffic routing policies for network connectable devices roaming within a geographical area. In particular, the first aspect recognizes that 3GPP network and WLAN discovery and selection by user equipment (UE) can be facilitated through use of Access Network Discovery and Selection Function (ANDSF) which can allow a network operator to specifically provision mobility, routing policies and discovery information. In the case of user equipment which does not allow, or is not configured to allow multiple network connections, the mobility policies set by ANDSF can be used to decide whether to camp or connect to 3GPP cell or to associate or connect to a Wi-Fi network. In the case of user equipment that supports multiple connections, the routing policies set by ANDSF can be used to decide whether a particular IP traffic flow should proceed via a Wi-Fi or 3GPP cell.

According to ANDSF techniques, mobility and routing policies communicated to user equipment typically contain static information set by home and/ or visited network operator preferences in relation to moving or routing traffic between WLAN and 3GPP networks. Such policies are sent to a user upon request or, in some cases, their transmission is network triggered. The first aspect recognises that ANDSF rules can be implemented in conjunction with load thresholds to select a technology (for example, 3GPP or WLAN, and that it is therefore possible for more dynamic information such as network or cell loading, backhaul capacity and radio link quality to be taken into consideration. To use ANDSF in conjunction with load thresholds, information indicative of a load in both a WLAN and 3GPP cell may be required.

Although WLAN load may be freely available in networks operating according to HS 2.0 standards, some cellular £GPP network operators are reluctant to reveal 3GPP cell loads within their network, either by provision of an absolute value or a relative indication. It may therefore be difficult to implement sensible mobility and/or routing schemes in scenarios in which limited network information is available to users operating in a region where a choice of networks is available.

The first aspect recognizes that it is possible to implement a local network selection policy, which can operate outside ANDSF techniques, but which may allow a user to interact with any ANDSF policies, if those exist in a region of the network.

The first aspect provides a cell-specific method of indicating network selection preferences to one or more users in a region of radio coverage supported by a base station. The preference or priorities calculated by means of the method of the first aspect may be applied by a base station on a per-user basis or may be applied to globally to all users operation in a region of radio coverage supported by that base station. Accordingly, communication of cell specific preferences and priorities may be indicated to users by means of, for example, direct RRC signalling, or broadcast signalling. The preferences may be used to control only active user equipment in a region of radio coverage, or cell, supported by a base station, or may be applied to users "camped on" in a cell supported by a base station. The preferences may be applied to both active and idle users in the region of radio coverage.

In some embodiments, cell-specific preferences relating to network choice may be of particular use to users determined to be at a cell edge. Accordingly, a base station may determine a preference or policy to be applied to such users and either communicate those policies only to such user equipment, or set global or broadcast policies with criteria which is likely to be met only by users operating at the cell edge.

In one embodiment, the at least one operational parameter of the cell of radio coverage comprises an operational parameter directly measurable by the base station. Accordingly, a base station may be directly aware of some significant operational parameters within a radio cell it supports. That is to say, if a specific event, for example a concert or accident, leads to a significant change is "normal" operation within a cell, the base station is likely to be in the best position to assess actual operational parameters being experienced or likely to be experienced by users in the cell. In some embodiments, the base station may take into account current, or instantaneous, measurements of operational parameters of a radio coverage cell. In some embodiments, a base station may take into account historical, or time averaged, operational parameters and characteristics relating to a user experience likely to be experienced by a user operating within a cell.

In one embodiment, the operational parameter of the cell of radio coverage comprises load. Accordingly, a base station may be aware of load being experienced or likely to be experienced within the cell and set a network selection policy based upon an operational parameter directly related to load within the radio coverage cell.

In one embodiment, the operational parameter comprises an indication of a global cell parameter. Accordingly, a base station may make an assessment of radio cell parameters being experienced globally across the cell, or may, for example, make an assessment based on a more localised operational parameter, for example, number of cell edge users, rather than total number of users within the cell.

In one embodiment, the operational parameter comprises a radio communication link operational parameter. Accordingly, rather than take into account all available channels or radio bearers, it may be possible to determine that one or more particular carriers or bearers is experiencing good, or poor service and implement a network selection policy, preference or priority to be applied in relation to such a particular carrier or bearer.

In one embodiment, the indication of assigned priority comprises preference criteria to be applied by the user equipment to select between communication using a communication link established with the base station or with a wireless access point of the wireless local area network. Accordingly, a priority indicated to a user may comprise a policy to be applied by a user based on information received and known to the user. That information may comprise information relating to the 3GPP cell and/or one or more Wi-Fi access points located within the region of radio coverage of the base station, or detectable by the user equipment.

In one embodiment, the preference criteria comprise criteria to be applied in respect of data traffic having a particular quality of service requirement. Accordingly, a network selection policy may be related to data traffic having a particular quality of service need. If data traffic is determined to require a high quality of service, a network most suited to supporting that quality of service may be selected.

In one embodiment, the preference criteria comprise criteria relating to load information available to the user equipment in relation to the wireless local area network. Accordingly, although no specific information relating to a load being experienced by a 3GPP network may be available to a user, priority criteria can be selected such that if a Wi-Fi network is particularly heavily loaded, it is likely that the 3GPP network would be selected and, similarly, that is the Wi-Fi network is only lightly loaded, the Wi-Fi network is likely to be selected by a user.

In one embodiment, the preference criteria comprise criteria relating to radio access quality determined by user equipment in relation to at least one communication link established by the user equipment with the base station or with a wireless access point of the wireless local area network. Accordingly, although loading in a network may be light, if a user struggles to maintain a good communication link with the lightly loaded network, it may not be an optimum candidate for selection, and the priority criteria maybe set accordingly.

In one embodiment, the steps of assessing, assigning and communicating are periodically repeated in order to allow for dynamic user equipment control. Accordingly, policies implemented on a cell-specific basis can be frequently, or continuously, updated by a base station in order to try and optimise user experience within a cell.

In one embodiment, the indication of assigned priority comprises an indication of a time period over which the assigned priority is to be applied by the user equipment. Accordingly, policies implemented by a base station may only apply for a particular time period. In some embodiments, policies implemented by a base station may only apply whilst a user is within the radio coverage region supported by that base station. In such cases, user equipment may be configured to return to network-wide policies and priorities after a time period has expired or on leaving a coverage region supported by a base station.

In one embodiment, the indication of assigned priority comprises an indication of a ranking with which the assigned priority is to be implemented by the user equipment if another priority rule is being applied by the user equipment. Accordingly, by ranking cell-specific policies within existing global policies held by user equipment, cell-specific policies may minimise their conflict with any global policies being implemented by user equipment.

A second aspect provides a computer program product operable, when executed on a computer, to perform the method of the first aspect.

A third aspect provides a base station configured to control user equipment operation in a radio coverage cell of a wireless telecommunication network supported by the base station, the user equipment being configured to communicate using a communication link established with the base station or with a wireless access point of a wireless local area network based upon a relative priority associated with each of the base station and the wireless access point, the base station comprising: assessment logic operable to assess at least one operational parameter of the cell of radio coverage; network priority logic operable to assign a priority to communication using a communication link established with the base station based on the assessment of the at least one operational parameter; and communication logic operable to communicate an indication of the assigned priority to the user equipment.

In one embodiment, the at least one operational parameter of the cell of radio coverage assessed by the assessment logic comprises an operational parameter directly measurable by the base station.

In one embodiment, the operational parameter of the cell of radio coverage assessed by the assessment logic comprises load.

In one embodiment, the operational parameter assessed by the assessment logic comprises an indication of a global cell parameter.

In one embodiment, the operational parameter comprises assessed by the assessment logic a radio communication link operational parameter.

In one embodiment, the indication of assigned priority comprises preference criteria to be applied by the user equipment to select between communication using a communication link established with the base station or with a wireless access point of the wireless local area network.

In one embodiment, the preference criteria comprise criteria to be applied in respect of data traffic having a particular quality of service requirement.

In one embodiment, the preference criteria comprise criteria relating to load information available to the user equipment in relation to the wireless local area network.

In one embodiment, the preference criteria comprise criteria relating to radio access quality determined by user equipment in relation to at least one communication link established by the user equipment with the base station or with a wireless access point of the wireless local area network.

In one embodiment, the steps of assessing, assigning and communicating are periodically repeated in order to allow for dynamic user equipment control.

In one embodiment, the indication of assigned priority comprises an indication of a time period over which the assigned priority is to be applied by the user equipment.

In one embodiment, the indication of assigned priority comprises an indication of a ranking with which the assigned priority is to be implemented by the user equipment if another priority rule is being applied by the user equipment.

Further particular and preferred aspects are set out in the accompanying independent and dependent claims. Features of the dependent claims may be combined with features of the independent claims as appropriate, and in combinations other than those explicitly set out in the claims.

Where an apparatus feature is described as being operable to provide a function, it will be appreciated that this includes an apparatus feature which provides that function or which is adapted or configured to provide that function.

## BRIEF DESCRIPTION OF THE DRAWINGS

Embodiments of the present invention will now be described further, with reference to the accompanying drawings, in which:

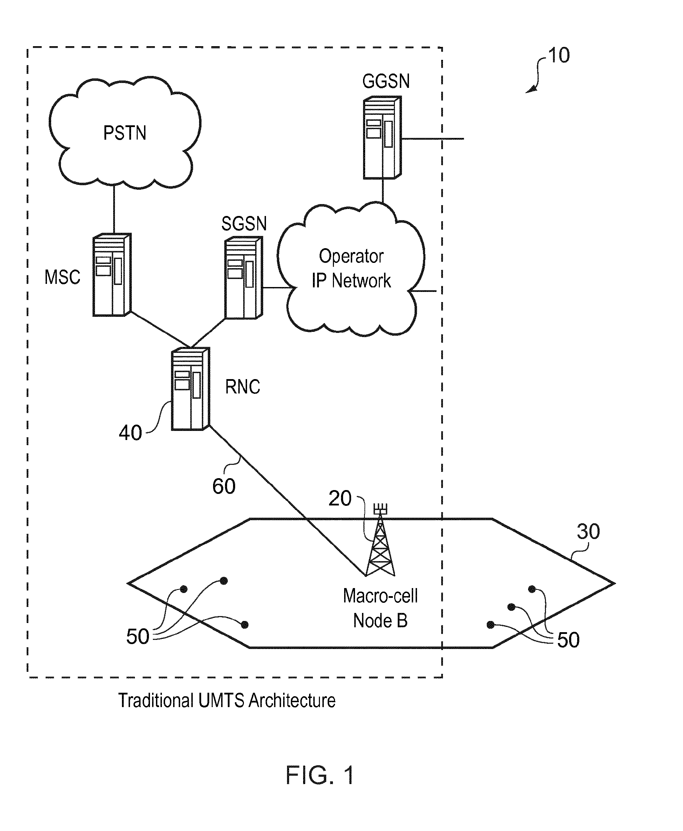

Figure 1 illustrates the main components of a cellular 3GPP wireless communication system according to one embodiment.

## DESCRIPTION OF THE EMBODIMENTS

Figure 1 illustrates schematically the main components of a wireless telecommunications network 10. In the UMTS network architecture illustrated user equipment 50 roam through the wireless telecommunications system. Base stations 20 are provided which support areas of radio coverage 30. A number of such base stations 20 are provided and are distributed geographically in order to provide a wide area of coverage to user equipment 50.

When user equipment is within an area served by a base station 30, communications may be established between the user equipment and the base station over associated radio links. Each base station typically supports a number of sectors within the geographical area of service 30.

Typically, a different antenna within a base station supports each associated sector. Each base station 20 has multiple antennas. It will be appreciated that Figure 1 illustrates a small subset of a total number of user equipment and base stations that may be present in a typical communication network. It will also be appreciated that different network architectures may be implemented, including, for example a Long Term Evolution (LTE) network in which the functionality provided by network nodes described above is provided by network nodes which are named differently but have analogous functionality.

It will be appreciated that one or more Wi-Fi networks (WLAN) may be available within the geographical region of coverage. Furthermore, it will be appreciated that network connectable devices may be operable to connect to both a 3GPP network and a Wi-Fi network.

### Overview

Before discussing the embodiments in any more detail, first an overview will be provided. Aspects provide a method of sending cell specific network selection to allow a user to choose between Wi-Fi and 3GPP RAN based upon the meeting of one or more criteria. The criteria may inform network selection information or take the form of selection policies sent to users. Those policies may take into account, amongst other things, both Wi-Fi and 3GPP cell load but without actually sending 3GPP load to a user. Aspects and embodiments may provide a user, for example by means of messaging sent over a 3GPP RAN, with an indication of, for example, a Wi-Fi load threshold which is to be used by a user for determining whether to select a 3GPP RAN or LTE RAN in relation to one or more radio bearers. In some embodiments, the message sent over the 3GPP RAN to users may instruct the implementation of selection criteria which modifying a trigger Wi-Fi load threshold based on 3GPP network cell load.

According to some embodiments, depending on a 3GPP cell load (eNB/RNC network load, eNB/RNC/H(e)NB backhaul capacity or similar), a base station or similar network control node operable to control a 3GPP cell may be configured to send users camped on, or connected to, the 3GPP cell with cell-specific network selection criteria or policies to be implemented in addition to global ANDSF policies provided by an ANDSF server to users.

According to some embodiments, a cell-specific network selection policy may comprise an indication of a preference of either the 3GPP cell or a WLAN Access Point (AP) for a set of different criteria. The policy may relate to mobility scenarios. In some embodiments, a cell specific policy may relate to priorities set as a result of CQI of a radio bearer or access network preferences for users supporting multiple connections based on 3GPP load information. In some embodiments, cell-specific policies are set by a 3GPP network control node without knowledge of loading of the Wi-Fi network or access point, but preferences and policies implemented by a user are nonetheless made conditional on parameters of a Wi-Fi network or access point load, for example, in the form of Wi-Fi load threshold.

Wi-Fi network load information is typically provided according to the following format and is transmitted over an access point beacon signal or in a probe response:

BSS Load element:

| | Element ID | Length (5) | Station Count | Channel Utilization | Available Admission Capacity |
|---|---|---|---|---|---|
| Octets: | 1 | 1 | 2 | 1 | 2 |

Where:
Station Count: the total number of STAs (stations) currently associated
Channel Utilization: the percentage of time, linearly scaled with 255 representing 100%, that the AP sensed the medium was busy:

$$\text{Channel Utilization} = \text{Integer}\left(\frac{\text{channel busy time}}{\#\text{ of measured consecutive beacon intervals} \times \text{beacon period} \times 1024} \times 255\right)$$

Available Admission Capacity: the remaining amount of medium time available via explicit admission control

If a user receives an Access Network Query Protocol (ANQP) message from the Wi-Fi network, then the user may also have backhaul information in relation to the Wi-Fi network, such as: Downlink Load; Uplink Load; an indication that the Wi-Fi network is At capacity: In this condition the AP won't allow additional mobile devices to associate; or Load measurement duration (LMD), which is an indication of a time interval over which load measurement is averaged.

Such information may be presented as an overall percentage (for example, Channel utilization or DL Load or UL load > 80% → Overall Load > 80%) or the precise form of information received in relation to BSS load or ANQP backhaul metrics can be taken into consideration in the design of policies set on a cell-specific basis.

In some embodiments, preferences and policies can be sent point-to-point, dedicated to a single user, or point-to-multipoint, for example, by being broadcast to many users. The policies for a 3GPP cell may be transmitted by the 3GPP Base Station supporting that cell.

In some embodiments, radio link quality (for example, received signal strength or received signal strength over interference) for the WLAN network and the 3GPP cell can be considered in the preference or policy design. Radio link quality may be used as a parameter on its own or in conjunction with cell load information.

In some embodiments, the Radio Access Network (RAN) network selection preference indicated or set by a cell-specific local policy may provide network preference in relation to all radio bearers available to a user, or some embodiments may set a policy which is radio bearer specific for users which are configured to support both 3GPP and Wi-Fi connections at the same time.

In some embodiments, a cell-specific network selection policy may be implemented which work with a global ANDSF policy. In some embodiments, a timer or validity areas during which cell specific network selection policies are to be active is set. Outside the period or validity area a global ANDSF policy can be used. In some embodiments a "rules priority" can be set in order to allow a user to select between cell-specific network selection preference policies and ANDSF policy rules.

<u>Examples of Cell-Specific Selection Policies</u>

**Example One**

Without taking into consideration explicit Wi-Fi Load, a cell-specific network selection preference policy includes an indication of 3GPP cell priority relative to a Wi-Fi access point. In this example, the lower the priority value the higher the priority.

```
3GPP cell priority = 3
WLAN AP priority:
» SSID AAAA = 5
» BSSID 1= 3
» BSSID 3 = 3
» BSSID 25 = 2
>> SSID BBBB = 2
» BSSID 3= 1
» BSSID 5= 2
```

In this example, the 3GPP cell is higher priority than Wi-Fi APs with SSID AAAA but lower priority than Wi-Fi APs with SSID BBBB. Among APs of SSID AAAA, BSSID 25 is higher priority than BSSID 1 and 3. Among APs of SSID BBBB, BSSID 3 is higher priority BSSID 5.

**Example Two**

This example takes into consideration overall Wi-Fi Load information. The cell specific network selection preference policy includes an indication of the 3GPP cell priority relative to the priority of Wi-Fi APs. In this example, the lower the priority value, the higher the priority.

If 3GPP load is low, the policy set is such that a possible network selection preference indicated to a user operates so that when a WLAN load is high, 3GPP cells are priority 1. The WLAN load is not known to the 3GPP network but a user can read the Wi-Fi network load.

3 GPP cell priority =1
WLAN AP priority:
>SSID AAAA= 5
» Wi-Fi Load Start = 80%
» Wi-Fi Load End = 100%
>>BSSID 1= 3
>>BSSID 3 = 3
>>BSSID 25 = 2
>SSID BBBB = 5
» Wi-Fi Load Start = 80%
» Wi-Fi Load End = 100%
» BSSID 3= 1
» BSSID 5= 2

Similarly, if 3GPP load is high, the policy is set such that a possible NW selection preference indicated to a user operates so that when the WLAN load is low, the 3GPP cell is lower priority than WLAN.

3GPP cell priority =5
WLAN AP priority:
>SSID AAAA= 1
» Wi-Fi Load Start = 0 %
» Wi-Fi Load End = 50%
>>BSSID 1= 3
>>BSSID 3 = 3
>>BSSID 25 = 2
>SSID BBBB = 1
» Wi-Fi Load Start =0%
» Wi-Fi Load End = 50%
» BSSID 3= 1
» BSSID 5= 2

In some embodiments, individual load information, for example, backhaul DL load, backhaul UL load, Number of STA, Channel Utilisation of a Wi-Fi AP, may be taken into consideration.

**Exam ple 3**

This example takes into consideration access radio quality of Wi-Fi and the 3GPP cell when setting a cell-specific network selection policy. The cell specific network selection preference may include an indication of the 3GPP cell priority relative to the Wi-Fi AP priority, taking into consideration the access radio quality of the Wi-Fi and 3GPP cell. In this example, the lower the priority value the higher the priority.

3GPP cell priority =5
3GPP Access radio quality < -105dBm
WLAN AP priority:
>SSID AAAA= 1
WLAN Access radio quality > -95 dBm (one of the APs within SSID AAAA)
>>BSSID 1= 3
>>BSSID 3 = 3
>>BSSID 25 = 2
>SSID BBBB = 1
WLAN Access radio quality > -95 dBm (one of the APs within SSID BBBB)
» BSSID 3= 1
» BSSID 5= 2
3 GPP cell priority =1
3GPP Access radio quality > -95dBm
WLAN AP priority:
>SSID AAAA= 5
WLAN Access radio quality < -105 dBm

>>BSSID 1= 3
>>BSSID 3 = 3
>>BSSID 25 = 2
>SSID BBBB = 5
WLAN Access radio quality < -105 dBm
» BSSID 3= 1
» BSSID 5= 2

**Example 4**

This example takes into consideration both the access radio quality of Wi-Fi and 3GPP cell and the Wi-Fi load. Such an example combines the approaches set out in relation to Example Two and Example Three above.

**Example 5**

In this example, a cell-specific network selection preference may be dependent upon indications related to QCI or logical channel priority of a bearer
Without taking load information into account:

QCI/logical channel priority= 1
3GPP cell priority = 1
WLAN AP priority:
>SSID AAAA= 5
>>BSSID 1= 3
>>BSSID 3 = 3
>>BSSID 25 = 2
>SSID BBBB = 2
» BSSID 3= 1
» BSSID 5= 2
QCI/logical channel priority=3
3 GPP cell priority = 5
WLAN AP priority:
>SSID AAAA= 1
>>BSSID 1= 3
>>BSSID 3 = 3
>>BSSID 25 = 2
>SSID BBBB = 1
» BSSID 3= 1
» BSSID 5= 2

Similarly, a policy may be implemented taking Wi-Fi load information into account. If 3GPP cell load is low, the policy set out below provides an example of a possible network selection preference to a user, which operates such that when WLAN load is high, 3GPP cells are priority 1 for bearer with QCI =1 and 3:

QCI/logical channel priority=1/ 3
3 GPP cell priority =1
WLAN AP priority:
>SSID AAAA= 5
» Wi-Fi Load Start = 80%
» Wi-Fi Load End = 100%
>>BSSID 1= 3
>>BSSID 3 = 3
>>BSSID 25 = 2
>SSID BBBB = 5
» Wi-Fi Load Start = 80%
» Wi-Fi Load End = 100%
» BSSID 3= 1
» BSSID 5= 2

When WLAN load is also low, an operator may prefer bearer QCI=3 (for example, internet access) to be routed to be communicated via the Wi-Fi network, and would prefer bearer QCI=1 (for example, VoIP) to be communicated using the 3GPP cell:

```
QCI/logical channel priority= 1
3GPP cell priority =1
WLAN AP priority:
>SSID AAAA= 5
» Wi-Fi Load Start =0%
» Wi-Fi Load End = 60%
>>BSSID 1= 3
>>BSSID 3 = 3
>>BSSID 25 = 2
>SSID BBBB = 5
» Wi-Fi Load Start =0%
» Wi-Fi Load End = 60%
» BSSID 3= 1
» BSSID 5= 2
QCI/logical channel priority=3
3GPP cell priority =5
WLAN AP priority:
>SSID AAAA= 1
» Wi-Fi Load Start = 0 %
» Wi-Fi Load End = 60%
>>BSSID 1= 3
>>BSSID 3 = 3
>>BSSID 25 = 2
>SSID BBBB = 1
» Wi-Fi Load Start = 0%
» Wi-Fi Load End = 60%
» BSSID 3= 1
» BSSID 5= 2
```

If a 3GPP cell load is high, an example of a possible cell-specific network selection preference to be implemented by a user may be implemented such that when the WLAN load is low, the 3GPP cell is lower priority than WLAN for bearer with QCI = 3 and a bearer with QCI=1 is maintained within the 3GPP cell:

```
QCI/logical channel priority= 1
3 GPP cell priority =1
WLAN AP priority:
>SSID AAAA= 5
» Wi-Fi Load Start = 0%
» Wi-Fi Load End = 50%
>>BSSID 1= 3
>>BSSID 3 = 3
>>BSSID 25 = 2
>SSID BBBB = 5
» Wi-Fi Load Start = 0%
» Wi-Fi Load End = 50%
» BSSID 3= 1
» BSSID 5= 2
QCI/logical channel priority=3
3 GPP cell priority =5
WLAN AP priority:
>SSID AAAA= 1
» Wi-Fi Load Start = 0%
» Wi-Fi Load End = 50%
>>BSSID 1= 3
```

>>BSSID 3 = 3
>>BSSID 25 = 2
>SSID BBBB = 1
» Wi-Fi Load Start = 0%
» Wi-Fi Load End = 50%
» BSSID 3= 1
» BSSID 5= 2

It will be appreciated that may implementations of policies may be configured other than those specifically set out in the above examples.

Cell-Specific Network Selection Policies and Global ANDSF Policies

Aspects and embodiments described may operate in conjunction with global ANDSF policies.

**Example One**

According to the first example, a cell specific network selection preference may override a global level ANDSF policy for a certain period of time.

Step 1: eNB sends a cell specific network selection preference in a dedicated/broadcast RRC message. A timer can be signaled in the same RRC message or a fixed UE timer is specified.

Step 2: Upon receiving the RRC signalling, the UE starts the timer and applies the cell specific network selection preference in messages for Connected mobility and Idle mobility. The UE is operable to suspend application of any global ANDSF policies for the period during which the timer is running.

Step 3_1: Upon timer expiry, the UE is configured to delete cell specific network selection preferences or policies and revert to use of a global ANDSF policy.

Step 3_2: Upon handover/re-establishment of a link with another 3GPP cell, the UE is operable to revert to use of a global ANDSF policy, assuming a new cell-specific network selection preference is not sent by a target 3GPP cell, or apply the new cell specific network selection preference provided by the target 3GPP cell.

Step 3_3: Upon receiving further RRC signaling relating to cell-specific network selection preference, either via dedicated RRC message or via broadcast message in idle mode, the UE may be configured to repeat Step 2.

**Example Two**

According to a second example, a rule priority or priorities are provided for each cell specific network selection preference.

Step 1: eNB is operable to send a user cell-specific network selection preference(s). Those preferences are sent in a dedicated or broadcast RRC message. A Rule Priority is also sent in relation to each cell specific network selection preference.

Step 2: Upon receiving the RRC signalling, a user is operable to apply the cell specific network selection preferences in a message for Connected mobility or Idle mobility, those cell-specific preferences being applicable in addition to any global ANDSF rules or policies.

Step 3_1: Upon handover or re-establishment to another 3GPP cell, a user is operable to revert to global ANDSF, assuming no new cell-specific network selection preferences are sent by a target 3GPP cell, or apply new cell-specific network selection preference(s) provided by the target 3GPP cell.

Step 3_2: Upon receiving further RRC signaling relating to cell-specific network selection preferences (either via dedicated RRC message or via broadcast message in idle mode), the UE is configured to repeat Step 2.

Aspects and embodiments may allow RAN level information to influence network selection and discovery without affecting a user following ANDSF policies, if present.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the Figures, including any functional blocks labelled as "processors" or "logic", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" or "logic" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/ or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. A method of controlling user equipment operation in a radio coverage cell of a wireless telecommunication network supported by a base station, said user equipment being configured to communicate using a communication link established with said base station or with a wireless access point of a wireless local area network based upon a relative priority associated with each of said base station and said wireless access point, said method comprising:

   assessing at least one operational parameter of said cell of radio coverage;
   assigning a priority to communication using a communication link established with said base station based on said assessment of said at least one operational parameter;
   and communicating an indication of said assigned priority to said user equipment.

2. A method according to claim 1, wherein said at least one operational parameter of said cell of radio coverage comprises an operational parameter directly measurable by said base station.

3. A method according to claim 1 or claim 2, wherein said operational parameter of said cell of radio coverage comprises load.

4. A method according to any preceding claim, wherein said operational parameter comprises an indication of a global cell parameter.

5. A method according to any one of claims 1 to 4, wherein said operational parameter comprises a radio communication link operational parameter.

6. A method according to any preceding claim, wherein said indication of assigned priority comprises preference criteria to be applied by said user equipment to select between communication using a communication link established with said base station or with a wireless access point of said wireless local area network.

7. A method according to claim 6, wherein said preference criteria comprise criteria to be applied in respect of data traffic having a particular quality of service requirement.

8. A method according to claim 6 or claim 7, wherein said preference criteria comprise criteria relating to load information available to said user equipment in relation to said wireless local area network.

9. A method according to any one of claims 6 to 8 , wherein said preference criteria comprise criteria relating to radio access quality determined by user equipment in relation to at least one communication link established by said user equipment with said base station or with a wireless access point of said wireless local area network.

10. A method according to any preceding claim, wherein said steps of assessing, assigning and communicating are periodically repeated in order to allow for dynamic user equipment control.

11. A method according to any preceding claim, wherein said indication of assigned priority comprises an indication of a time period over which said assigned priority is to be applied by said user equipment.

12. A method according to any preceding claim, wherein said indication of assigned priority comprises an indication of a ranking with which said assigned priority is to be implemented by said user equipment if another priority rule is being applied by said user equipment.

13. A computer program product operable, when executed on a computer, to perform the method of any one of claims 1 to 12.

14. A base station configured to control user equipment operation in a radio coverage cell of a wireless telecommunication network supported by said base station, said user equipment being configured to communicate using a communication link established with said base station or with a wireless access point of a wireless local area network based upon a relative priority associated with each of said base station and said wireless access point, said base station comprising:

assessment logic operable to assess at least one operational parameter of said cell of radio coverage;
network priority logic operable to assign a priority to communication using a communication link established with said base station based on said assessment of said at least one operational parameter; and
communication logic operable to communicate an indication of said assigned priority to said user equipment.

FIG. 1

# EP 2 787 770 A1

**EUROPEAN SEARCH REPORT**

Application Number

EP 13 30 5446

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | WO 2009/149761 A1 (NOKIA SIEMENS NETWORKS OY [FI]; FORSSELL MIKA [FI]; MUSTAJAERVI JARI []) 17 December 2009 (2009-12-17)<br>* abstract *<br>* page 1, line 29 - page 2, line 14 *<br>* page 3, line 1 - line 24 *<br>* page 5, line 26 - page 6, line 9 *<br>* page 6, line 30 - page 7, line 14 *<br>* page 9, line 4 - page 10, line 3 *<br>* page 11, line 28 - page 12, line 9 *<br>* page 13, line 14 - page 15, line 11 *<br>* page 21, line 25 - page 22, line 8 *<br>----- | 1-14 | INV.<br>H04W48/06 |
| Y | WO 2007/138530 A2 (KONINKL PHILIPS ELECTRONICS NV [NL]; SOOMRO AMJAD [US]; CAVALCANTI DAV)<br>6 December 2007 (2007-12-06)<br>* abstract *<br>* page 1, line 18 - line 23 *<br>* page 3, line 1 - page 4, line 3 *<br>* page 5, line 16 - page 6, line 27 *<br>* page 8, line 9 - line 6 *<br>* figures 1A-6 *<br>----- | 1-14 | |
| A | US 2013/084872 A1 (SUGA JUNICHI [JP])<br>4 April 2013 (2013-04-04)<br>* abstract *<br>* paragraph [0013] *<br>* paragraph [0030] - paragraph [0037] *<br>* paragraph [0051] - paragraph [0057] *<br>* figures 1, 2, 3, 6 *<br>-----<br>-/-- | 1-14 | TECHNICAL FIELDS SEARCHED (IPC)<br><br>H04W |

The present search report has been drawn up for all claims

| Place of search | Date of completion of the search | Examiner |
|---|---|---|
| Munich | 11 September 2013 | Lombardi, Giuseppe |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

14

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 2005/039202 A2 (VIA TELECOM INC [US]; QIAN FENG [US]; CZAJA STANISLAW [US]) 28 April 2005 (2005-04-28) * abstract * * paragraph [0016] - paragraph [0019] * * paragraph [0027] - paragraph [0039] * * figure 1A * | 1-14 | |
| A | EP 2 437 551 A1 (GEMALTO SA [FR]) 4 April 2012 (2012-04-04) * abstract * * paragraph [0003] - paragraph [0004] * * paragraph [0011] - paragraph [0014] * * paragraph [0019] - paragraph [0021] * | 1-14 | |

|  | TECHNICAL FIELDS SEARCHED (IPC) |
|---|---|
|  |  |

The present search report has been drawn up for all claims

| Place of search | Date of completion of the search | Examiner |
|---|---|---|
| Munich | 11 September 2013 | Lombardi, Giuseppe |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................
& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 13 30 5446

This annex lists the patent family members relating to the patent documents cited in the above-mentioned European search report.
The members are as contained in the European Patent Office EDP file on
The European Patent Office is in no way liable for these particulars which are merely given for the purpose of information.

11-09-2013

| Patent document cited in search report | | Publication date | Patent family member(s) | | Publication date |
|---|---|---|---|---|---|
| WO 2009149761 | A1 | 17-12-2009 | NONE | | |
| WO 2007138530 | A2 | 06-12-2007 | CN | 101461192 A | 17-06-2009 |
| | | | EP | 2030374 A2 | 04-03-2009 |
| | | | JP | 2009539296 A | 12-11-2009 |
| | | | KR | 20090023584 A | 05-03-2009 |
| | | | US | 2011205910 A1 | 25-08-2011 |
| | | | WO | 2007138530 A2 | 06-12-2007 |
| US 2013084872 | A1 | 04-04-2013 | US | 2013084872 A1 | 04-04-2013 |
| | | | WO | 2011148487 A1 | 01-12-2011 |
| WO 2005039202 | A2 | 28-04-2005 | EP | 1673950 A2 | 28-06-2006 |
| | | | TW | I248266 B | 21-01-2006 |
| | | | US | 2005136937 A1 | 23-06-2005 |
| | | | WO | 2005039202 A2 | 28-04-2005 |
| EP 2437551 | A1 | 04-04-2012 | EP | 2437551 A1 | 04-04-2012 |
| | | | EP | 2622912 A1 | 07-08-2013 |
| | | | WO | 2012041664 A1 | 05-04-2012 |

EPO FORM P0459

For more details about this annex : see Official Journal of the European Patent Office, No. 12/82